Europäisches Patentamt

European Patent Office

Office européen des brevets

(19)

(11) **EP 1 262 682 A1**

(12) **EUROPEAN PATENT APPLICATION**
published in accordance with Art. 158(3) EPC

(43) Date of publication:
**04.12.2002 Bulletin 2002/49**

(21) Application number: **01900252.6**

(22) Date of filing: **04.01.2001**

(51) Int Cl.[7]: **F16F 13/10**

(86) International application number:
**PCT/JP01/00008**

(87) International publication number:
**WO 02/055900 (18.07.2002 Gazette 2002/29)**

(84) Designated Contracting States:
**DE FR GB**

(71) Applicant: **TOYO TIRE & RUBBER CO., LTD .
Nishi-ku, Osaka-shi, Osaka 550-0002 (JP)**

(72) Inventors:
• **TAKASHIMA, Yukio, Toyo Tire & Rubber Co., Ltd
Osaka-shi, Osaka 550-0002 (JP)**

• **TAKAOKA, Masashi, Toyo Tire & Rubber Co., Ltd
Osaka-shi, Osaka 550-0002 (JP)**

(74) Representative: **Strehl Schübel-Hopf & Partner
Maximilianstrasse 54
80538 München (DE)**

(54) **LIQUID-FILLED VIBRATION ISOLATOR**

(57) The present invention provides a liquid-filled type vibration isolator which supports a power unit such as an automobile engine or the like which can effectively perform the suppression of the vibration and the improvement of the steering stability and the riding comfort at the time of runninng and the suppression of vibration at the time of idling. To achieve such advantages, the liquid-filled type vibration isolator comprises a vibration prevention base body (4) made of a rubber-like elastic body which is interposed between upper and lower metal fittings (2)(3), a liquid chamber (5) which is defined between the vibration prevention base body (4) and a diaphragm (6), a partition body (7) which partitions the liquid chamber into two chambers and an orifice passage (8), wherein an inclination angle ($\theta$) which a mounting surface (3a) of the lower metal fitting (3) facing a support member (B) of a car body side makes to a horizontal plane is set to not less than 30°, and a ratio (Kd1/Kd2) between a dynamic spring constant (Kd1) in the upward and downward direction of a vehicle and a dynamic spring constant (Kd2) in the leftward and rightward direction of the vehicle which are held by the vibration prevention base body (4) is set within a range of 1.0-3.0, and the orifice is set such that the orifice is capable of performing the vibration attenuation function in a vibration frequency band at the time of idling.

*FIG. 1*

EP 1 262 682 A1

## Description

[TECHNICAL FIELD]

The present invention mainly relates to a liquid-filled type vibration isolator which is used for supporting a power unit of an automobile engine or the like while preventing the vibration.

[BACKGROUND]

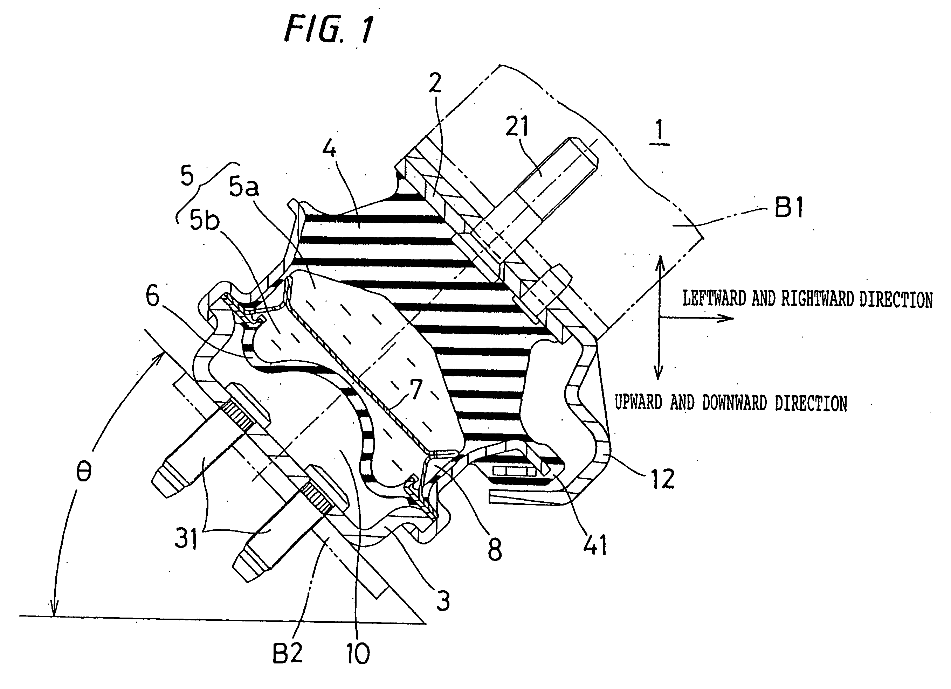

As a mount which supports a power unit such as an automobile engine while preventing the transmission of vibration of the power unit to a car body side, a liquid-filled type vibration isolator shown in Fig. 1 is known, for example.

Such a liquid-filled type vibration isolator 1 includes an upper metal fitting 2 which is mounted on a vibration source side, a lower metal fitting 3 which is mounted on a car body side, a vibration prevention base body 4 made of a rubber-like elastic body which connects both metal fittings 2, 3 to each other, a diaphragm 6 which is arranged at the metal fitting 3 side while facing the vibration prevention base body 4 in an opposed manner, a liquid chamber 5 which is formed between the vibration prevention base body 4 and the diaphragm 6, a partition body 7 which partitions the liquid chamber 5 into a main liquid chamber 5a and a sub liquid chamber 5b, and an orifice passage 8 which is formed in an outer peripheral portion or the like of the partition body 7 to make the main liquid chamber 5a and the sub liquid chamber 5b communicate with each other. Due to the liquid level resonance action generated by the liquid flows in both liquid chambers through the orifice passage 8 and the vibration absorption effect derived from the resiliency of the vibration prevention body, the liquid-filled type vibration isolator can perform the vibration attenuation function and the vibration insulation function.

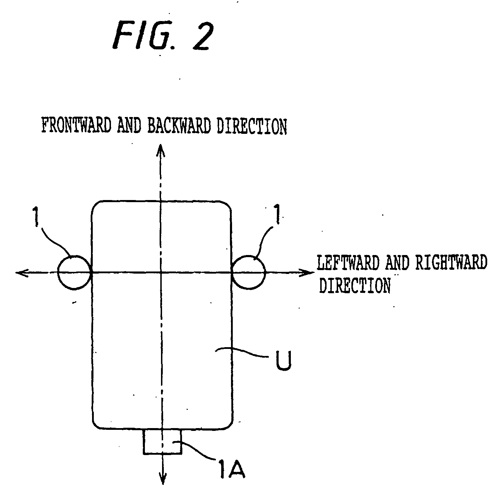

Usually, as shown in Fig. 2, the above-mentioned vibration isolators 1 are arranged such that the devices 1 face each other in an opposed manner at left and right sides of a power unit U comprised of an engine, a transmission and the like and support the power unit U. The vibration isolator 1 is mounted on a support member such as a car-body-side bracket or the like by means of mounting bolts 31 which are protruded downwardly from the lower metal fitting 3. In this case, as shown in Fig. 1, it is often the case that a mounting surface 3a of the above-mentioned metal fitting 3 is mounted on a support member B2 such that a given inclination angle θ is made between the mounting surface 3a and a horizontal plane.

In the above-mentioned support structure for the power unit U, the steering stability and the riding comfort are generally determined by the dynamic spring constants in respective directions consisting of an upward and downward direction of a vehicle and a leftward and rightward direction of the vehicle which the vibration prevention body 4 of the above-mentioned vibration isolator 1 made of the rubber-like elastic body holds. Further, the damping at the time of idling and at the time of runninng is achieved through a liquid filling effect derived from two liquid chambers 5a, 5b, the orifice passage 8 and the like.

Here, in case of this type of conventional liquid-filled type vibration isolator, the orifice passage which makes both liquid chambers communicate with each other is generally set to perform the vibration absorption (damping) effect to the shake vibration at the time of the steady-state runninng in the frequency band of 12 to 15 Hz. Accordingly, conventional liquid-filled type vibration isolator exhibits the poor damping effect at the time of idling.

Further, there has been a case that, depending on the inclination angle θ in the mounting state of vibration prevention base body 4 to the car-body-side bracket of the vehicle when the vibration prevention base body 4 is mounted on the vehicle, the dynamic spring constants in the vehicle upward-and-downward direction and in the vehicle leftward-and-rightward direction held by the vibration prevention base body 4 are not sufficient to suppress the vibration and to enhance the steering stability and the riding comfort.

The present invention provides a liquid-filled type vibration isolator which supports a power unit such as an automobile engine or the like, wherein the liquid-filled type vibration isolator achieves the suppression of vibration and the enhancement of the steering stability and the riding comfort at the time of steady-state runninng by making use of an angle in a vehicle mounted state and a ratio between a dynamic spring constant in the vehicle upward-and-downward direction and a dynamic spring constant in the vehicle leftward-and-rightward direction which are held by a vibration prevention base body made of a rubber-like elastic body, and the liquid-filled type vibration prevention the device achieves the suppression of vibration at the time of idling by making use of a throttling effect of an orifice passage which is formed in a partition member, whereby the liquid-filled type vibration isolator can effectively suppress the vibrations of respectively different vehicles.

(Disclosure of the Invention)

The present invention is directed to a liquid-filled type vibration isolator which includes, in the same manner as the above-mentioned liquid-filled type vibration isolator, two upper and lower metal fittings which are disposed at a vibration body side and a support side, a vibration prevention base body made of a rubber-like elastic body which is interposed between both metal fittings, a diaphragm which is disposed such that the diaphragm faces the vibration prevention base body in an opposed manner, a liquid chamber which is defined between the vibration prevention base body and the diaphragm, and a partition body which partitions this liquid chamber into a main liquid chamber and a sub liquid chamber, and forms an orifice which makes both liquid chambers communicate with each other in a peripheral portion of the partition body, wherein an inclination angle θ which a mounting surface of the lower metal fitting facing a support member of a car body side makes to a horizontal plane is set to not less than 30°, and a ratio (Kd1/Kd2) between a dynamic spring constant (Kd1) in the upward and downward direction of a vehicle and a dynamic spring constant (Kd2) in the leftward and rightward direction of the vehicle which are held by the vibration prevention base body is set within a range of 1.0-3.0, and the orifice is set such that the orifice is capable of performing the vibration attenuation function in a vibration frequency band at the time of idling.

According to this liquid-filled type vibration isolator, at the time of runninng of the vehicle, due to the elastic deformation of the vibration prevention base body made of the rubber-like elastic body which sets the ratio between the dynamic spring constant in the upward and downward direction of the vehicle and the dynamic spring constant in the leftward and rightward direction of the vehicle in the above-mentioned manner, a favorable vibration prevention effect can be achieved. Particularly, by mounting the liquid-filled type vibration isolator with the inclination angle θ in the mounting state set to not less than 30° and by setting the ratio (Kd1/Kd2) between the dynamic spring constant of the vibration prevention base body in the upward and downward direction of the vehicle and the dynamic spring constant of the vibration prevention base body in the leftward and rightward direction of the vehicle within the range of 1.0 - 3.0, the dynamic spring constants can be decreased and advantageous effects related with the improvement of the steering stability and the riding comfort can be greatly enhanced.

That is, since the static spring constant (Ks) in the upward and the downward direction is fixed, when the ratio (Kd1/Kd2) between the dynamic spring constant in the upward and downward direction of the vehicle and the dynamic spring constant in the leftward and rightward direction of the vehicle exceeds 3.0, the dynamic spring constant in the upward and downward direction of the vehicle becomes greater than the dynamic spring constant in the leftward and rightward direction of the vehicle so that the power unit which constitutes a supporting object is liable to be easily moved in the upward and downward direction and hence, becomes unstable. Further, when the dynamic constant ratio (Kd1/Kd2) is less than 1.0, the vibration prevention base body becomes relatively rigid in the upward and downward direction and the dynamic spring constant in the leftward and rightward direction becomes large whereby the power unit is liable to easily wobble in the left and right direction and hence becomes unstable. Accordingly, to ensure the suppression of the vibration at the time of runninng and the improvement of the steering stability and the riding comfort, it is preferable to set the dynamic spring constant ratio within the above-mentioned range.

Further, at the time of idling, due to a throttling effect of the orifice passage which is formed so as to perform the vibration attenuation function in the vibration frequency band of the idling vibration, a favorable vibration suppression effect can be achieved.

Accordingly, with the vibration isolator of the present invention, the vehicle vibration which differs between the condition at the time of runninng and the condition at the time of idling can be effectively suppressed and the performance of the vehicle can be enhanced.

The vibration frequency at the time of idling is changed corresponding to the number of cylinders of an engine. For example, when the number of cylinders is 4, the vibration frequency becomes 22-23 Hz, when the number of cylinders is 6, the vibration frequency becomes approximately 30 Hz, and when the number of cylinders is 8, the vibration frequency is around 40 Hz. Accordingly, the cross-sectional area and the length of the orifice passage are determined such that the liquid level resonance action takes place in these vibration frequency bands. However, there may be a case that the vibration frequency band is used in a mode that the band is shifted such that the anti-resonance action derived from the orifice passage does not take place and hence, it is preferable to make the orifice passage perform the vibration attenuation function in the frequency band of the idling vibration in a slightly wide range of 20-60 Hz.

In the above-mentioned liquid-filled type vibration isolator, the reason that the inclination angle θ which the mounting surface of the lower metal fitting facing the support member of the car body side makes to the horizontal plane is set to not less than 30° is to decrease the dynamic spring constant at the time of runninng by setting the ratio (Kd1/Kd2) between the dynamic spring constant of the vibration prevention base body in the upward and downward direction of the vehicle and the dynamic spring constant of the vibration prevention base body in the leftward and rightward direction of the vehicle within the range of 1.0 - 3.0 thereby obtaining advantageous effects with respect to the improvement of the steering stability and the riding comfort.

Further, for this end, it is preferable to set the inclination angle θ which the mounting surface of the lower metal fitting facing the supporting member of the car body side makes to the horizontal plane to 30° - 50°.

That is, when the inclination angle θ is not more than 30°, the power unit which constitutes a supporting object is liable to easily move in the upward and downward direction and hence becomes unstable, while when the inclination angle θ exceeds 50°, the power unit is liable to easily wobble in the left and right direction and hence becomes unstable.

[Brief Explanation of the drawings]

Fig. 1 is a cross-sectional view of a liquid-filled type vibration isolator.
Fig. 2 is a schematic explanatory view of a support structure for a power unit.
Fig. 3 is a characteristics diagram showing the comparison of the dynamic spring constant and the attenuation coefficient between an embodiment of the present invention and a comparison example.

[Best Mode for Carrying out the Invention]

A preferred embodiment of a liquid-filled type vibration isolator of the present invention is explained in conjunction with drawings hereinafter. However, the present invention is not limited to such an embodiment.
Fig. 1 shows an example of a liquid-filled type vibration isolator 1 which carries out the present invention. The fundamental constitution includes, as mentioned in the Background of the Invention, an upper metal fitting 2 which is mounted on a member B1 which is connected to a power unit such as an engine or the like which constitutes a vibration source side, a lower metal fitting 3 which is mounted on a support member B2 of a car body side, a vibration prevention base body 4 made of a rubber-like elastic body which connects both metal fittings 2, 3 to each other, a diaphragm 6 which is arranged at the metal fitting 3 side while facing the vibration prevention base body 4 in an opposed manner, a liquid chamber 5 which is formed between the vibration prevention base body 4 and the diaphragm 6, and a partition body 7 which partitions the liquid chamber 5 into a main liquid chamber 5a and a sub liquid chamber 5b, and an orifice passage 8 which is formed in an outer peripheral portion of the partition body 7 to make the main liquid chamber 5a and the sub liquid chamber 5b communicate with each other.
In the drawing, the vibration prevention base body 4 has an approximately conical-frustum shape, wherein the upper side metal fitting 2 is fixedly secured to an upper end portion of a small-diameter side thereof by means of vulcanization adhesion means and a cylindrical member 9 which is joined to the lower metal fitting 3 is fixedly secured to a lower large-diameter-side outer peripheral portion thereof by means of vulcanization adhesion means.
The upper metal fitting 2 has an approximately disc-like shape and a mounting bolt 21 which is fixedly secured by means of press fit means or welding means is protruded upwardly from a central portion of the metal fitting 2. The upper metal fitting 2 is fixedly secured to a power-unit- side member B1 of an automobile by means of a mounting bolt 21. Numeral 12 indicates a stopper fitting which is called a stabilizer and is integrally secured to the metal fitting 2. The stopper fitting 12 is provided for restricting a large displacement of the vibration prevention base body 4 in the upward and downward direction between the stopper fitting 12 and a stopper rubber portion 41 which is formed such that the stopper rubber portion 41 is outwardly protruded from a portion of the vibration prevention base body 4.
The lower metal fitting 3 has an approximately cylindrical shape with a bottom and a lower end portion of the cylindrical member 9 is fixedly secured to a flange-like open peripheral portion of the metal fitting 3 by means of caulking means. An outer peripheral portion of the partition body 7 and an outer peripheral portion of the diaphragm 6 are both fixedly secured to the open peripheral portion of the metal fitting 3. Further, a mounting bolt 31 is mounted on a bottom wall portion of the lower metal fitting 3 with the use of press fit means or the like such that the mounting bolt 31 is protruded downwardly in the axial direction of the device. The lower metal fitting 3 is fixedly secured to the car-body-side support member B2 by means of this mounting bolt 31. An air chamber 10 is defined between the metal fitting 3 and the diaphragm 6. This air chamber is communicated with atmosphere in one case and is formed of an airtight chamber in other case.
In an engine room of the automobile, as shown in Fig. 2, the above-mentioned liquid-filled type vibration isolators 1 are installed _to support the power unit U in a manner that the vibration of the power unit U can be prevented, wherein two liquid-filled isolators 1 are arranged at left and right sides of the power unit U such as an engine or the like mounted on the vehicle in the state that two liquid-filled isolators 1 face each other in an opposed manner.
Here, the mounting bolts 31 which are protruded from the lower metal fittings 3 of the liquid-filled type vibration isolators 1 are designed to be fastened to the support member B2 such as car-body-side brackets or the like at both left and right sides of the unit U in the state that the mounting bolts 31 are inclined to the upward and downward direction (vertical direction). That is, a support surface of the above-mentioned member B2 makes an inclination angle θ to a horizontal surface which corresponds to the above-mentioned inclination angle and a mounting surface 3a formed of a bottom wall of the lower metal fitting 3 which is mounted on the support surface also makes an inclination of the same angle θ.
In this invention, the inclination angle θ which the mounting surface 3a of the lower metal fitting 3 makes to the horizontal surface is set to not less than 30°, and preferably to 30°- 50°. Further, to ensure the stability of the supporting state in the upward and the downward direction as well as in the leftward and rightward direction, a ratio (Kd1/Kd2) between a dynamic spring constant (Kd1) in the upward and downward direction of the vehicle and a dynamic spring constant (Kd2) in the leftward and rightward direction of the vehicle which are held by the vibration prevention base body 4 is set within a range of 1.0 - 3.0.

Further, with respect to the orifice passage 8 formed in the outer peripheral portion of the above-mentioned partition body 7, the orifice passage 8 is determined to perform the vibration attenuation function in conformity with the vibration frequency band at the time of idling which is changed corresponding to the number of cylinders of the engine. That is, the vibration frequency at the time of idling is changed within a range of 22-40 Hz corresponding to the number of cylinders of an engine having, for example 4 cylinders, 6 cylinders, 8 cylinders or the like. Further, there may be a case that the vibration isolator 1 is served in such a manner that the vibration frequency is shifted to prevent the generation of the anti-resonance action derived from the orifice passage. Accordingly, the cross-sectional area and the length of the orifice passage 8 are determined such that the vibration attenuation function derived from the throttling effect and the liquid level resonant action can be performed in the frequency band of the idling vibration with a slightly broad range of 20 - 60 Hz,.

Here, apart from the above-mentioned vibration isolators 1, a vibration isolator 1A having a stopper function in the frontward and backward direction is mounted on a rear end portion of the power unit U.

In the above-mentioned support structure, at the time of runninng of the vehicle, due to the elastic deformation of the vibration prevention base body 4 which sets the ratio between the dynamic spring constant in the upward and downward direction of the vehicle and the dynamic spring constant in the left ward and right ward direction of the vehicle within the above-mentioned specified range, a favorable vibration suppression effect can be achieved. Particularly, by mounting the vibration isolators 1 such that the inclination angle $\theta$ in the mounting state is set to not less than 30° and by setting the ratio (Kd1/Kd2) between the dynamic spring constant of the vibration prevention base body in the upward and downward direction of the vehicle and the dynamic spring constant of the vibration prevention base body in the leftward and rightward direction of the vehicle within the range of 1.0 - 3.0, the dynamic spring constant can be decreased and the steering stability and the riding comfort can be improved.

Further, at the time of idling, due to the throttling effect of the orifice passage which is formed such that the vibration attenuation function is performed in the vibration frequency band of the idling vibration, the advantageous effect of favorably suppressing the vibration can be achieved. Accordingly, the vibration isolators 1 can effectively suppress the vehicle vibration which differs between the condition at the time of the normal runninng and the condition at the time of idling so that the vehicle performance can be enhanced.

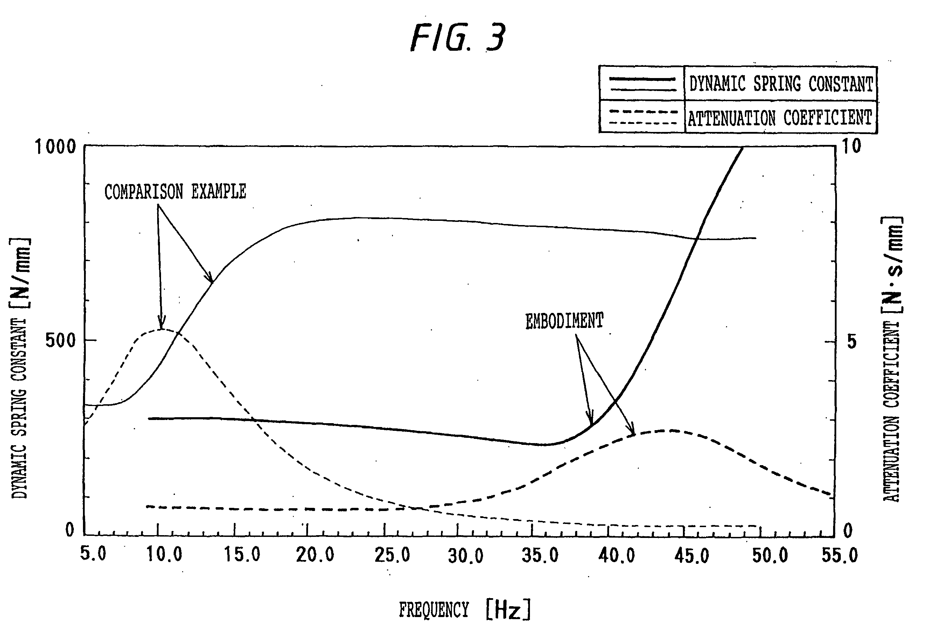

Fig. 3 shows a comparison of the dynamic spring constant in the upward and downward direction and the attenuation coefficient with respect to the liquid-filled type vibration isolator having the structure shown in Fig. 1 and constituting the embodiment in which the inclination angle $\theta$ of the mounting surface in the vehicle mounted state is set to 30° and the orifice is set to perform the vibration attenuation function in a given frequency band of the idling vibration and a vibration device having the same identical structure and constituting a comparison example in which the inclination angle $\theta$ of the mounting surface in the vehicle mounted state is set to 15° and the orifice is set to perform the vibration attenuation function in the frequency band (12-15 Hz) of the shake vibration.

According to this Fig. 3, in the case of the comparison example, the peak frequency of the attenuation coefficient appears around 10 Hz and the dynamic spring constant in the upward and downward direction is increased at the high frequency side in the vicinity of the peak frequency. To the contrary, in the embodiment, the peak frequency of the attenuation coefficient appears around approximately 44 Hz and the low dynamic spring constant is maintained up to this vicinity and particularly the dynamic spring constant in the vicinity of the frequency 12-15 Hz of the shake vibration is decreased.

Accordingly, along with the fact that while the inclination angle $\theta$ in the vehicle mounted state is set to 15° in the comparison example, the inclination angle $\theta$ in the vehicle mounted state is set to 30° in the embodiment, the embodiment can improve the dynamic constant ratio (Kd1/Kd2) at the frequency of 15 Hz, for example in a following manner compared with the dynamic constant ratio of the comparison example.

Kd1/Kd2 = 695/200 = 3.48 (comparison example)

Kd1/Kd2 = 295/193 = 1.53 (embodiment)

Accordingly, at the time of usual runninng, the low dynamic constant can be realized and hence, the favorable vibration suppression effect can be achieved and the steering stability and the riding comfort can be enhanced.

The structure of the liquid-filled type vibration isolator 1, the manner of mounting of the device 1 to the vehicle, the stopper mechanism and the like shown in Fig. 1 merely show one example. With respect to a liquid-filled type vibration isolator which has other structure but shares the basic constitution in common, the inclination angle of the mounting surface, the ratio between the dynamic spring constant in the upward and downward direction and the dynamic spring constant in the left ward and right ward direction, and the characteristics of the orifice passage can be set and carried out in the same manner as mentioned above.

[Industrial Applicability]

As has been described above, according to the liquid-filled type vibration isolator, with respect to the suppression of the vibration and the improvement of the steering stability and the riding comfort at the time of runninng, they can be achieved by determining the inclination angle of the mounting surface in the vehicle mounted state and the ratio between the dynamic spring constant of the vibration prevention body made of the rubber-like elastic body in the upward and downward direction of the vehicle and the dynamic spring constant of the vibration prevention body in the leftward and rightward direction of the vehicle, while with respect to the suppression of vibration at the time of idling, it can be achieved by the throttling effect of the orifice passage which is formed in the partition member so that the vibrations of vehicles which are different from each other can be effectively suppressed and hence, the vehicle characteristics can be enhanced.

the vibration attenuation function in the frequency band of the idling vibration of 20 - 60 Hz.

**Claims**

1. A liquid-filled type vibration isolator comprising two upper and lower metal fittings which is disposed at a vibration body side and a support side, a vibration prevention base body made of a rubber-like elastic body which is interposed between both metal fittings, a diaphragm which is disposed such that the diaphragm faces the vibration prevention base body in an opposed manner, a liquid chamber which is defined between the vibration prevention base body and the diaphragm, and a partition body which partitions this liquid chamber into a main liquid chamber and a sub liquid chamber and, forming an orifice which makes both liquid chambers communicate with each other in a peripheral portion of the partition body, wherein

    an inclination angle θ which a mounting surface of the lower metal fitting which faces a support member of a car body side makes to a horizontal plane is set to not less than 30°, and

    a ratio (Kd1/Kd2) between a dynamic spring constant (Kd1) in the upward and downward direction of a vehicle and a dynamic spring constant (Kd2) in the leftward and rightward direction of the vehicle which are held by the vibration prevention base body is set within a range of 1.0 - 3.0, and the orifice is set such that the orifice is capable of performing the vibration attenuation function in a vibration frequency band at the time of idling.

2. A liquid-filled type vibration isolator according to claim 1, wherein the inclination angle θ which the mounting surface of the lower metal fitting which faces the support member of the car body side makes to the horizontal plane is set to 30° - 50°.

3. A liquid-filled type vibration isolator according to claim 1 or 2, wherein said orifice is set to perform

FIG. 1

LEFTWARD AND RIGHTWARD DIRECTION

UPWARD AND DOWNWARD DIRECTION

EP 1 262 682 A1

# FIG. 2

FRONTWARD AND BACKWARD DIRECTION

LEFTWARD AND RIGHTWARD DIRECTION

U

1

1

1A

# FIG. 3

FREQUENCY [Hz]

## INTERNATIONAL SEARCH REPORT

| International application No. |
|---|
| PCT/JP01/00008 |

**A. CLASSIFICATION OF SUBJECT MATTER**
Int.Cl⁷ F16F13/10

According to International Patent Classification (IPC) or to both national classification and IPC

**B. FIELDS SEARCHED**

Minimum documentation searched (classification system followed by classification symbols)
Int.Cl⁷ F16F13/10, B62K5/12

Documentation searched other than minimum documentation to the extent that such documents are included in the fields searched

| | | | | |
|---|---|---|---|---|
| Jitsuyo Shinan Koho | 1926-2001 | Jitsuyo Shinan Toroku Koho | 1996-2001 |
| Kokai Jitsuyo Shinan Koho | 1971-2001 | Toroku Jitsuyo Shinan Koho | 1994-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-33825, A (TOKAI RUBBER INDUSTRIES, LTD.), 09 February, 1993 (09.02.93) (Family: none) | 1-3 |
| A | Microfilm of the specification and drawings annexed to the request of Japanese Utility Model Application No. 114768/1989 (Laid-open No.5365 /1991), (Hokushin Kogyo K.K.), 23 May, 1991 (23.05.91) (Family: none) | 1-3 |
| A | JP, 4-370434, A (Toyota Motor Corporation), 22 December, 1992 (22.12.92) (Family: none) | 1-3 |
| A | US, 5772189, A (YAMASHITA RUBBER KABUSHIKI KAISHA), 30 June, 1998 (30.06.98) & JP, 7-293626, A | 1-3 |
| A | DE, 4205229, A1 (BOGE AG), 02 September, 1993 (02.09.93) (Family: none) | 1-3 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 April, 2001 (17.04.01) | 24 April, 2001 (24.04.01) |

| Name and mailing address of the ISA/ | Authorized officer |
|---|---|
| Japanese Patent Office | |
| Facsimile No. | Telephone No. |

Form PCT/ISA/210 (second sheet) (July 1992)